# EUROPEAN PATENT APPLICATION

(11) **EP 3 522 664 A1**
(43) Date of publication of application: **07.08.2019**
(21) Application number: 17861618.1
(22) Date of filing: 13.10.2017
(51) Int. Cl.: H04W 74/08

(54) **BEAM-BASED MULTI-CONNECTION COMMUNICATION METHOD, TERMINAL DEVICE, AND NETWORK DEVICE**

(30) Priority: 21.10.2016 CN 201610921222
(71) Applicant: Huawei Technologies Co., Ltd., Longgang District Shenzhen, Guangdong 518129 (CN)
(72) Inventor: TANG, Xun, Shenzhen Guangdong 518129 (CN); CHAI, Li, Shenzhen Guangdong 518129 (CN); MIAO, Jinhua, Shenzhen Guangdong 518129 (CN)
(74) Representative: Pfenning, Meinig & Partner mbB
(86) International application number: PCT/CN2017/106093
(87) International publication number: WO 2018/072651

(57) **Abstract**

The present invention relates to a beam-based multi-connection communication method, a terminal device, and a network device. In the beam-based multi-connection communication method, after a terminal device establishes an RRC connection to a terminal, a base station or the terminal device may trigger a random access process to establish at least one beam connection, or when the terminal device is idle, establishment of at least one beam connection may be completed as a random access process is performed, to reduce system overheads for performing beam communication restoration by the terminal device after communication on a single beam is interrupted, and avoid a data transmission interruption between the base station and the terminal device, thereby ensuring normal communication between the base station and the terminal device.

## Description

### TECHNICAL FIELD

The present invention relates to the high-frequency wireless communications field, and in particular, to a beam-based multi-connection communication method, a terminal device, and a network device.

### BACKGROUND

In the high-frequency wireless communications field, as a frequency increases, a path loss of a radio signal increases, and coverage of a cell decreases. Consequently, more access network devices (the access network device may be a base station or a transmission reception point (English: transmission reception point, TRP)) need to be deployed within a same area, to ensure coverage, greatly increasing network deployment costs. Therefore, a communication method for coverage enhancement needs to be provided.

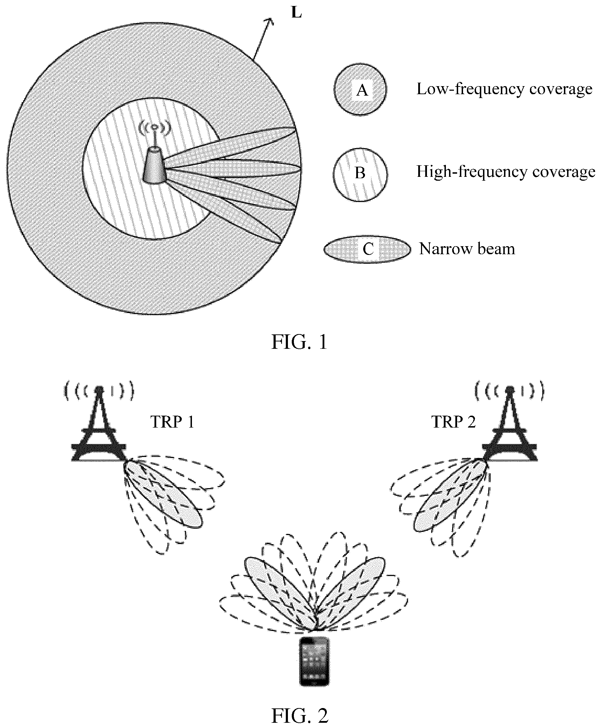

In the prior art, a beam gain is obtained by using a beamforming technology (namely, a multi-antenna processing technology) in which a plurality of antennas are used to form a narrow beam. In this way, a path loss is compensated for to some extent. As shown in FIG. 1, an area A is low-frequency coverage, an area B is high-frequency coverage, an area C is coverage of a narrow beam, and L is a boundary of a cell covered by a base station. Because of a relatively high beam gain of the narrow beam, a high-frequency path loss is compensated for. To ensure contiguous coverage of a cell, a plurality of narrow beams need to be used. If a width of each narrow beam is 10°, an entire cell is covered by 36 same narrow beams. For a terminal, first, initial beam alignment between the terminal and the base station (namely, an initial beam connection between the terminal and the base station) is completed through a random access process. To be specific, the terminal searches for a serving beam between the terminal and the base station. The serving beam is a beam with best signal quality in all beams that can be received by the terminal. Then, as the terminal moves or rotates or a channel changes, the terminal further needs to perform beam tracking. To be specific, the terminal measures signal quality of all the beams in real time, and reports measurement results to the base station. The base station determines whether to switch a serving beam, and if switching is required, notifies the terminal by using an indication message.

However, a high-frequency communications channel changes drastically, and a case in which channel quality deteriorates sharply often occurs. Signal propagation paths are usually a direct path and a reflection path, and are easily affected by an obstacle. When the serving beam is congested, a data interruption between the terminal and the base station is caused, a beam tracking mechanism of the terminal cannot continue to work, and beam alignment needs to be performed again through the random access process, increasing system signaling overheads.

### SUMMARY

This application provides a beam-based multi-connection communication method, a terminal device, and a network device, to implement a plurality of beam connections between the terminal device and the network device (a base station), so as to reduce system overheads for performing beam communication restoration by the terminal device, and avoid a data transmission interruption between the network device and the terminal device, thereby ensuring normal communication between the network device and the terminal device.

According to a first aspect, a beam-based multi-connection communication method is provided. When a terminal device communicates with and is connected to a network device by using a first beam, the method includes: establishing, by the terminal device, a communication connection to the network device by using a second beam, to reduce system overheads for performing beam communication restoration by the terminal device after communication on a single beam is interrupted, and avoid a data transmission interruption between the network device and the terminal device, thereby ensuring normal communication between the network device and the terminal device.

In an optional implementation, the first beam is a beam in a first beam pair, and the first beam is a beam used by the terminal device; the second beam is a beam in a second beam pair, and the second beam is a beam used by the terminal device; and before the establishing, by the terminal device, communication to the network device by using a second beam, the method further includes: receiving, by the terminal device by using the second beam, a reference signal sent on each of a plurality of beams of the network device, where the reference signal may be a synchronization signal; measuring, by the terminal device, signal quality of the plurality of beams of the network device based on the reference signals; and determining, in a plurality of second beams of the terminal device based on measurement results, each second beam (for example, a beam with best signal quality) matching each second beam of the network device, to determine the second beam pair. A process in which UE measures a plurality of beams of a base station may be periodic, to achieve accuracy and real-time performance of the measurement.

In an optional implementation, the establishing, by the terminal device, communication to the network device by using a second beam specifically includes: sending, by the terminal device, a random access preamble message to the network device by using the second beam; receiving, by the terminal device by using the second beam, a random access response message that is sent by the network device based on the random access preamble message; sending, by the terminal device, a first message to the network device based on the random access response message by using the second beam, where the first message includes identifier information of the terminal device and beam connection establishment request information, the first message may be a MAC CE message or an RRC message, and identifier information of the UE may be a C-RNTI; and
receiving, by the terminal device by using the second beam, a first response message that is sent by the network device based on the identifier information of the terminal device and the beam connection establishment request information, so that the terminal device establishes the communication connection to the network device.

In an optional implementation, the first response message may include beam connection establishment information; and the receiving, by the terminal device by using the second beam, a first response message that is sent by the network device based on the identifier information of the terminal device and the beam connection establishment request information specifically includes: receiving, by the terminal device by using the second beam, the beam connection establishment information that is sent by the network device based on the identifier information of the terminal device and the beam establishment request information, to instruct the terminal device to establish the communication connection to the network device.

In an optional implementation, before the establishing, by the terminal device, communication to the network device by using a second beam, the method further includes:
receiving, by the terminal device by using a plurality of beams, the reference signals sent on the plurality of beams of the network device, where the reference signal may be a synchronization signal; measuring, by the terminal device, the signal quality of the plurality of beams of the network device based on the reference signals, to obtain attribute information, such as signal quality information, of the plurality of beams; sending, by the terminal device, a measurement report to the network device by using the first beam, where the measurement report includes the measurement results of the signal quality of the plurality of beams of the network device; receiving, by the terminal device by using the first beam, a second message that is sent by the network device based on the measurement results, where the second message may be an RRC message, a Media Access Control layer control element message, or a physical downlink control channel order, and the second message includes first indication information; and determining, by the terminal device, the second beam pair according to the first indication information, to ensure high quality of a signal transmitted between the terminal device and the network device.

In an optional implementation, the first indication information includes index information of a second beam in the plurality of beams of the network device, to indicate the second beam determined by the network device; and the determining, by the terminal device, the second beam pair according to the first indication information specifically includes: determining, by the terminal device, the second beam pair based on the index information of the second beam.

In an optional implementation, the first indication information further includes instruction information, and the instruction information may include random access resource information; and the establishing, by the terminal device, communication to the network device by using a second beam specifically includes: sending, by the terminal device, a random access preamble message to the network device based on the random access resource information in the instruction information by using the second beam; receiving, by the terminal device by using the second beam, a random access response message that is sent by the network device based on the random access preamble message, where the random access response message includes second indication information; and determining, by the terminal device according to the second indication information, to establish the communication connection to the network device.

According to a second aspect, a beam-based multi-connection communication method is provided. If a communication connection (an RRC connection) is not established between a terminal device and a network device, the method includes: determining, by the terminal device, a plurality of first beam pairs, where the first beam pair includes a first beam of the terminal device and a first beam of the network device; sending, by the terminal device, a first message to the network device by using each first beam, where the first message includes identifier information of the terminal device, and the first message may be an RRC message (such as an RRC establishment request message) or a MAC CE message; receiving, by the terminal device by using each first beam, a second message that is sent by the network device based on the identifier information; and establishing a communication connection to the network device based on the second message, to reduce system overheads for performing beam communication restoration by the terminal device after communication on a single beam is interrupted, and avoid a data transmission interruption between the network device and the terminal device, thereby ensuring normal communication between the network device and the terminal device.

In an optional implementation, the terminal device receives, by using each first beam, a reference signal sent on each of a plurality of first beams of the network device; and the terminal device measures signal quality of the plurality of first beams of the network device based on the reference signals. The measurement process may be periodic, to achieve time validity and accuracy of a measurement result.

In an optional implementation, the terminal device sends the first message to the network device by using a second beam of the terminal device other than the first beam, where the first message includes identifier information of the terminal device and index information of the first beam; and the terminal device receives, by using each first beam, a second message that is sent by the network device based on the identifier information and the index information of the first beam.

In an optional implementation, the second message is an RRC connection establishment message, or the second message is a beam connection establishment message; and the receiving, by the terminal device, by using the plurality of first beams, second messages that are sent by the network device based on the identifier information, where the second message may be an RRC message (such as an RRC connection establishment message) or a MAC CE message, to establish an RRC connection or establish a beam connection specifically includes: when the network device determines, based on the identifier information, that a working status of the terminal device is an idle mode, receiving, by the terminal device by using one first beam, the RRC connection establishment message sent by the network device, so that the terminal device establishes an RRC connection to the network device; or when the network device determines, based on the identifier information, that a working status of the terminal device is a connected mode, or when the terminal device is in an idle mode, but the network device identifies that an RRC connection establishment message is already sent to the terminal device, receiving, by the terminal device by using the plurality of first beams, the beam connection establishment message sent by the network device, so that the terminal device establishes a plurality of beam connections to the network device.

In an optional implementation, the establishing, by the terminal device, a communication connection to the network device based on the second message specifically includes: when the terminal device receives the RRC connection establishment message sent by the network device, establishing, by the terminal device, the RRC connection to the network device; or when the terminal device receives the beam connection establishment message sent by the network device, establishing, by the terminal device, the beam connection to the network device.

In an optional implementation, before the sending, by the terminal device, a first message to the network device by using each first beam, the method further includes: sending, by the terminal device, a random access preamble message to the network device by using each first beam; and receiving, by the terminal device by using each first beam, a random access response message that is sent by the network device based on the random access preamble message.

In an optional implementation, the sending, by the terminal device, a random access preamble message to the network device by using each first beam specifically includes: simultaneously sending, by the terminal device, the random preamble access messages to the network device by using the first beams; or successively sending, by the terminal device, the random preamble access messages to the network device by using the first beams, to achieve time validity of transmission between the terminal device and the network device.

According to a third aspect, a beam-based multi-connection communication method is provided. If a network device communicates with and is connected to a terminal device by using a first beam, the method includes: establishing, by the network device, a communication connection to the terminal device by using a second beam, to reduce system overheads for performing beam communication restoration by the terminal device after communication on a single beam is interrupted, and avoid a data transmission interruption between the network device and the terminal device, thereby ensuring normal communication between the network device and the terminal device.

In an optional implementation, the first beam is a beam in a first beam pair, and the first beam is a beam used by the network device; the second beam is a beam in a second beam pair, and the second beam is a beam used by the network device; and
before the establishing, by the network device, a communication connection to the terminal device by using a second beam, the method further includes: sending, by the network device, reference signals to the terminal device by using a plurality of second beams, so that the terminal device measures signal quality of the plurality of second beams (for example, performs channel estimation), to determine the second beam pair, to implement high-quality signal transmission between the terminal device and the network device.

In an optional implementation, the establishing, by the network device, communication to the terminal device by using a second beam specifically includes: receiving, by the network device by using the second beam, a random access preamble message sent by the terminal device; sending, by the network device, a random access response message to the terminal device based on the random access preamble message by using the second beam; and receiving, by the network device by using the second beam, a first message that is sent by the terminal device based on the random access response message, where the first message includes identifier information of the terminal device and beam connection establishment request information, the first message may be a MAC CE message or an RRC message, and identifier information of UE may be a C-RNTI; and
sending, by the network device, a first response message to the terminal device based on the identifier information of the terminal device and the beam connection establishment request information by using the second beam, so that the network device establishes the communication connection to the terminal device by using the second beam.

In an optional implementation, a first response message may include beam connection establishment information; and
the sending, by the network device, a first response message to the terminal device based on the identifier information of the terminal device and the beam connection establishment request information by using the second beam specifically includes: sending, by the network device, the beam connection establishment information to the terminal device based on the identifier information of the terminal device and the beam connection establishment request information by using the second beam, where the first response message may further include beam connection establishment rejection information or RRC establishment acknowledgement information.

In an optional implementation, before the establishing, by the network device, communication to the terminal device by using a second beam, the method further includes: sending, by the network device, the reference signals to the terminal device by using a plurality of beams, so that the terminal device measures signal quality of the plurality of beams of the network device; receiving, by the network device by using the first beam, a measurement report sent by the terminal device, where the measurement report includes measurement results of the signal quality of the plurality of beams of the network device; and after determining the second beam based on the measurement results, sending, by the network device, a second message to the terminal device by using the first beam, where the second message includes first indication information, so that the terminal device determines the second beam pair according to the first indication information.

In an optional implementation, the first indication information includes index information of the second beam of the network device, so that the terminal device determines the second beam pair based on the index information.

In an optional implementation, the first indication information further includes instruction information, and the instruction information may include random access resource information; and the establishing, by the network device, communication to the terminal device by using a second beam specifically includes: receiving, by the network device by using the second beam, a random access preamble message that is sent by the terminal device based on the random access resource information in the instruction information; and sending, by the network device, a random access response message to the terminal device based on the random access preamble message by using the second beam, where the random access response message includes second indication information, so that the terminal device determines, according to the second indication information, to establish the communication connection to the network device.

According to a fourth aspect, a beam-based multi-connection communication method is provided. If a communication connection (an RRC connection) is not established between a terminal device and a network device, the method includes:
receiving, by the network device, a first message that is sent by the terminal device after the terminal device determines a plurality of first beam pairs, where the first message may be an RRC message (such as an RRC establishment request message) or a MAC CE message, and the first message includes identifier information of the terminal device; and sending, by the network device, a second message to the terminal device based on the identifier information of the terminal device, so that the terminal device establishes a communication connection to the network device based on the second message, to reduce system overheads for performing beam communication restoration by the terminal device after communication on a single beam is interrupted, and avoid a data transmission interruption between the network device and the terminal device, thereby ensuring normal communication between the network device and the terminal device.

In an optional implementation, the receiving, by the network device, a first message that is sent by the terminal device after the terminal device determines a plurality of first beam pairs specifically includes: receiving, by the network device by using a first beam of the network device, the first message that is sent by the terminal device after the terminal device determines the plurality of first beam pairs, where the first beam of the network device is a beam in the first beam pair.

In an optional implementation, the method further includes: receiving, by the network device by using a second beam of the network device, the first message that is sent by the terminal device after the terminal device determines the plurality of first beam pairs, where the first message includes the identifier information of the terminal device and index information of a first beam of the terminal device in the first beam pair, and the second beam of the network device is a beam other than the first beam; and the sending, by the network device, a second message to the terminal device based on the identifier information of the terminal device specifically includes: sending, by the network device, the second message to the terminal device based on the identifier information of the terminal device and the index information of the first beam of the terminal device, to flexibly establish a plurality of beam connections.

In an optional implementation, the second message may be an RRC message (such as an RRC connection establishment message) or a MAC CE message, and the second message is used to establish an RRC connection or establish a beam connection; and the sending, by the network device, second messages to the terminal device based on the identifier information by using a plurality of first beams specifically includes: when the network device determines, based on the identifier information, that a working status of the terminal device is an idle mode, sending, by the network device, the RRC connection establishment message to the terminal device by using one first beam, so that the terminal device establishes an RRC connection to the network device; or when the network device determines, based on the identifier information, that a working status of the terminal device is a connected mode, or when the terminal device is in an idle mode, but the network device identifies that an RRC connection establishment message is already sent to the terminal device, sending, by the network device, the beam connection establishment messages to the terminal device by using the plurality of first beams, so that the terminal device establishes a plurality of beam connections to the network device. The network device may identify the second beam of the network device according to a connection criterion of a network device. The criterion may include: ensuring that signal quality is higher than a preset threshold, and/or the determined second beam and a first beam of the network device in a first communication connection (an RRC connection) do not belong to a same TRP, to ensure good signal quality after a beam connection is established, and further avoid a synchronous change of signals such as synchronous attenuation caused by a same TRP.

In an optional implementation, before the receiving, by the network device by using a plurality of first beams, a first message sent by the terminal device, the method further includes: receiving, by the network device by using the plurality of first beams, random preamble access messages sent by the terminal device; and sending, by the network device, random access response messages to the terminal device based on the random access preamble messages by using the plurality of first beams.

In an optional implementation, the receiving, by the network device by using the plurality of first beams, random access preamble messages sent by the terminal device specifically includes: simultaneously receiving, by the network device by using the plurality of first beams, the random preamble access messages sent by the terminal device; or successively receiving, by the network device by using the plurality of first beams, the random preamble access messages sent by the terminal device, to achieve time validity of transmission between the terminal device and the network device.

According to a fifth aspect, a terminal device is provided. The terminal device has a function of implementing behavior of the terminal device in the method design according to the first aspect. The function may be implemented by using hardware, or may be implemented by hardware by executing corresponding software. The hardware or the software includes one or more modules corresponding to the foregoing function.

The terminal device may further include a storage unit, configured to store instruction information and data information for communication between the terminal device and a network device.

According to a sixth aspect, a terminal device is provided. The terminal device has a function of implementing behavior of the terminal device in the method design according to the second aspect. The function may be implemented by using hardware, or may be implemented by hardware by executing corresponding software. The hardware or the software includes one or more modules corresponding to the foregoing function.

The terminal device may further include a storage unit, configured to store instruction information and data information for communication between the terminal device and a network device.

According to a seventh aspect, a network device is provided. The network device has a function of implementing behavior of the network device in the method design according to the fourth aspect. The function may be implemented by using hardware, or may be implemented by hardware by executing corresponding software. The hardware or the software includes one or more modules corresponding to the foregoing function.

The network device may further include a storage unit, configured to store instruction information and data information for communication between a terminal device and the network device.

According to an eighth aspect, a network device is provided. The network device has a function of implementing behavior of the network device in the method design according to the fifth aspect. The function may be implemented by using hardware, or may be implemented by hardware by executing corresponding software. The hardware or the software includes one or more modules corresponding to the foregoing function.

The network device may further include a storage unit, configured to store instruction information and data information for communication between a terminal device and the network device.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic diagram of coverage of a base station in different frequency bands;
FIG. 2 is a schematic diagram of a plurality of beam connections of a terminal according to an embodiment of the present invention;
FIG. 3A is a schematic diagram of a topology structure of an LTE communications system in the prior art;
FIG. 3B is a schematic diagram of a topology structure of a 5G communications system in the prior art;
FIG. 4 is a schematic diagram of a process of scanning an uplink beam and a downlink beam on a base station side in the prior art;
FIG. 5 shows a random access process of a terminal and a base station in the prior art;
FIG. 6 is a signaling exchange diagram of a beam-based multi-connection communication method according to an embodiment of the present invention;
FIG. 7 is a schematic structural diagram of a MAC CE subheader part according to an embodiment of the present invention;
FIG. 8 is a schematic structural diagram of a MAC CE payload part according to an embodiment of the present invention;
FIG. 9 is a signaling exchange diagram of another beam-based multi-connection communication method according to an embodiment of the present invention;
FIG. 10 is a schematic structural diagram of a random access response message according to an embodiment of the present invention;
FIG. 11 is a signaling exchange diagram of still another beam-based multi-connection communication method according to an embodiment of the present invention;
FIG. 12 is a schematic structural diagram of a terminal according to an embodiment of the present invention;
FIG. 13 is a schematic structural diagram of another terminal according to an embodiment of the present invention;
FIG. 14 is a schematic structural diagram of a base station according to an embodiment of the present invention;
FIG. 15 is a schematic structural diagram of another base station according to an embodiment of the present invention;
FIG. 16 is a schematic structural diagram of still another terminal according to an embodiment of the present invention; and
FIG. 17 is a schematic structural diagram of still another base station according to an embodiment of the present invention.

### DESCRIPTION OF EMBODIMENTS

The technical solutions of the present invention are further described in detail with reference to the accompanying drawings and embodiments as follows:

A beam communication method provided in the present invention is applied to a cellular communications network in a high-frequency wireless communications scenario. A technology described in the present invention is applicable to a Long Term Evolution (English: Long Term Evolution, LTE) system, or other wireless communications systems using various radio access technologies, for example, a system that uses an access technology such as Code Division Multiple Access, Frequency Division Multiple Access, Time Division Multiple Access, Orthogonal Frequency Division Multiple Access, or Single Carrier Frequency Division Multiple Access. In addition, the technology is also applicable to a subsequently evolved system using an LTE system, for example, a 5th generation 5G system or a new radio (English: new radio, NR) system.

In the present invention, nouns "network" and "system" are often used alternately, but a person skilled in the art may understand their meanings. A terminal device in the present invention may include various handheld devices, in-vehicle devices, wearable devices (English: wearable device, WD), or computing devices that have a wireless communication function, or another processing device connected to a wireless modem, and various forms of user equipments (English: user equipment, UE), mobile stations (English: mobile station, MS), terminals (terminal), terminal equipments (English: terminal equipment), and the like. A base station (English: Base Station, BS) in the present invention is a network device deployed in a radio access network and configured to provide a wireless communication function to a terminal. The base station may include a macro base station, a micro base station, a relay station, an access point, and the like in various forms. In systems using different radio access technologies, devices having a function of a base station may have different names. For example, in an LTE network, the device is referred to as an evolved NodeB (English: evolved NodeB, eNB, or eNodeB), and in a 5th generation 5G or NR network, the device is referred to as a new radio NodeB (English: new radio NodeB, NR-NB). For ease of descriptions, in the present invention, the foregoing terminal devices may be collectively referred to as UE, and network devices providing a wireless communication function to the UE may be collectively referred to as a base station.

Main network elements used in the embodiments of the present invention are described in detail below:
An eNB is configured to form a narrow beam in a downlink direction to expand coverage, and may also receive signals in different directions by using different beams in an uplink direction. The eNB can support data sending and receiving by using two or more beams at any moment.

A TRP is configured to form a narrow beam in the downlink direction to expand coverage, and may also receive signals in different directions by using different beams in the uplink direction.

UE is configured to: determine an available beam by searching for reference information (such as a synchronization signal or a pilot signal) sent by the eNB/the TRP, and feed back a selection result to the eNB/the TRP. In addition, if a plurality of antennas are deployed on a UE side, a transmission or reception technology of beamforming may be used on the UE side to form a plurality of transmit and receive beams. As shown in FIG. 2, the UE may communicate with a plurality of TRPs (such as a TRP 1 and a TRP 2) by using a plurality of beams, or may communicate with one TRP (such as a TRP 1 or a TRP 2) by using a plurality of beams. The UE can support data sending and receiving by using two or more beams at any moment.

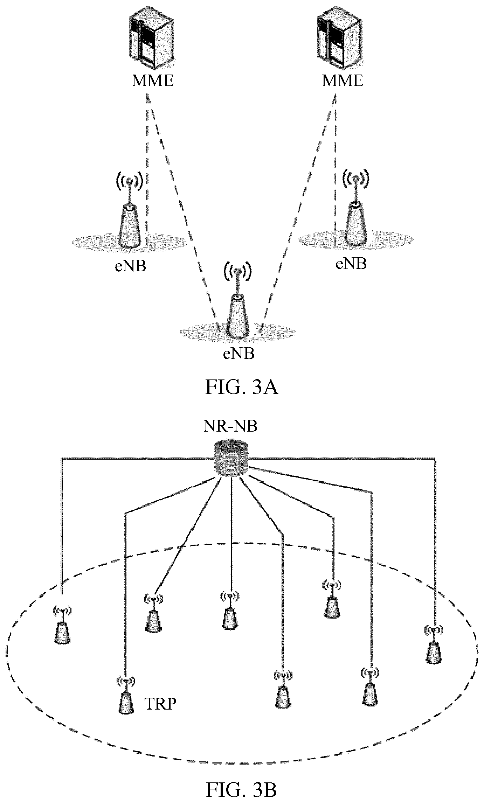

In an LTE communications system shown in FIG. 3A, there is at least one eNB under control of one mobility management entity (English: mobile management entity, MME). There are a plurality of cells of each eNB. In each cell, the eNB may complete coverage of the cell by using a plurality of transmit beams, to communicate with UE.

In a 5G or NR system shown in FIG. 3B, there may be one or more TRPs under control of one NR-NB. Each TRP can form a plurality of beams. In each cell, the TRP may complete coverage of the cell by using a plurality of transmit beams, to communicate with UE.

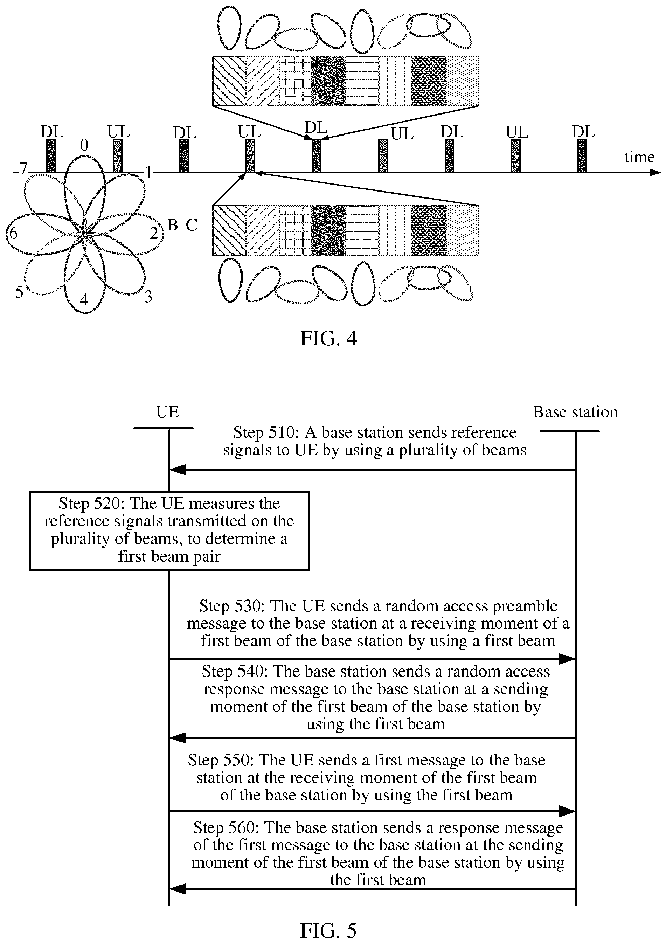

Further, since an area covered by each beam is limited, a beam scanning process needs to be performed to complete coverage of a cell. When a base station completes coverage of a cell by using a plurality of narrow beams, the base station may send or receive data in a time division/frequency division/wavelength division manner or a combination thereof. For the time division manner, a time length used by each beam may be set separately, or may be one or more subframes, or may be one or more symbols. As shown in FIG. 4, a base station may complete coverage of an entire cell through time division multiplexing, the base station has eight beams, and the eight beams are respectively identified by using digital symbols 0 to 7. A lateral axis is a time axis. There is at least one uplink (English: uplink, UL) receive subframe and at least one downlink (English: downlink, DL) receive subframe on the time axis. The beams represented by the digital symbols are sent to UE chronologically, and a time period A to a time period G occupied by the beams represented by the digital symbols are the same. When the base station receives uplink data, in a separate uplink receive subframe, only data in a corresponding beam direction is received on each symbol. When the base station sends downlink data, in a separate downlink transmit subframe, only data in a corresponding beam direction is sent on each symbol.

In the embodiments of the present invention, after the terminal UE communicates with and is connected to the base station by using a first beam, the terminal UE further establishes a beam communication connection to the base station by using a second beam, to establish a plurality of beam connections between the UE and the base station.

Optionally, after the terminal UE communicates with and is connected to the base station by using a first beam in a first beam pair, the terminal UE communicates with and is connected to the base station by using a second beam in a second beam pair. The first beam pair includes a first beam of the terminal UE and a first beam of the base station. The second beam pair includes a second beam of the terminal UE and a second beam of the base station.

The communication connection may be a Radio Resource Control (English: Radio Resource Control, RRC) connection established between the UE and the base station.

Optionally, a process in which the terminal UE establishes the communication connection to the base station by using the first beam may be a random access process.

FIG. 5 is a signaling exchange diagram of a beam-based multi-connection communication method according to an embodiment of the present invention. As shown in FIG. 5, the method may include the following steps.

Step 510: A base station sends reference signals to UE by using a plurality of beams.

The reference signal may be a synchronization signal. The synchronization signal is used by the UE to complete downlink synchronization. After completing the downlink synchronization, an indication message, for example, an uplink resource allocated to the UE for transmitting data or control signaling, of the base station can be correctly obtained.

The base station sends synchronization signals to the UE by using a plurality of transmit beams. To be specific, one synchronization signal is transmitted on one transmit beam, and the synchronization signals transmitted on the transmit beams may be the same or different. In addition to the synchronization signal, there may also be a separate reference signal specially used for channel estimation on each beam.

Step 520: The UE measures the reference signals transmitted on the plurality of beams of the base station, to determine a first beam pair, where the first beam pair includes a first transmit beam of the UE and a first receive beam of the base station.

The UE measures, by using a plurality of local receive beams, signal quality of the reference signals delivered by the base station and transmitted on the plurality of transmit beams, to select a first transmit beam with best signal quality as a transmit beam, and select a first receive beam with best signal quality from a plurality of receive beams of the UE as a receive beam. Therefore, the UE determines the first beam pair. The first beam pair includes the first transmit beam of the UE and the first receive beam of the base station. A reference signal with best quality is obtained by using the beam pair, namely, an optimal beam pair. The signal quality may be measured by a value of reference signal received power (English: reference signal receiving power, RSRP) or reference signal received quality (English: reference signal receiving quality, RSRQ) of each beam.

Optionally, an optimal transmit beam of the UE and an optimal receive beam of the base station form an optimal uplink beam pair, and an optimal receive beam of the UE and an optimal transmit beam of the base station form an optimal downlink beam pair. The optimal uplink beam pair and the optimal downlink beam pair may be a same beam pair or different beam pairs.

When channel reciprocity is satisfied, the optimal uplink beam pair and the optimal downlink beam pair are a same beam pair. When channel reciprocity is not satisfied, the optimal uplink beam pair and the optimal downlink beam pair are different beam pairs, to be specific, an optimal downlink beam pair and an optimal uplink beam pair that belong to one beam connection are not a same beam pair. A process of determining the optimal uplink beam pair may also be implemented in the random access process, and details are not described in the present invention. In subsequent descriptions of the present invention, channel reciprocity can be applied by default, and a scenario in which channel reciprocity cannot be applied has no substantial impact on the present invention and is not described in detail.

Step 530: The UE sends a random access preamble message to the base station at a receiving moment of a first beam of the base station by using a first uplink beam.

Before step 530 is performed, after the UE completes the downlink synchronization and receives a system message sent by the base station to obtain a cell random access resource configuration, the UE randomly selects a preamble on any random access time-frequency resource.

Then, the UE sends the random access preamble message to the base station at the receiving moment of the first beam of the base station by using a first beam of the UE.

Step 540: The base station sends a random access response message to the UE at a sending moment of the first beam of the base station by using the first beam.

Before performing step 540, the base station calculates a corresponding timing advance (English: timing advance, TA) value based on a received random access preamble.

The base station sends the random access response message to the base station at the sending moment of the first beam of the base station by using the first beam. The random access response message may include the TA value and an uplink scheduling grant (English: uplink grant, UL-Grant). The TA value is used to implement UL synchronization, and the UL-Grant is used to indicate UL data sending by the UE.

Step 550: The UE sends a first message to the base station at the receiving moment of the first beam of the base station by using the first beam, where the first message may include identifier information of the UE.

The first message may be an RRC connection establishment request message, and the identifier information of the UE may be a cell-radio network temporary identifier (English: Cell-Radio Network Temporary Identifier, C-RNTI).

The UE sends the RRC connection establishment request message to the base station at the receiving moment of the first beam of the base station based on a resource indication in the received UL-Grant and the received TA value. The message may include the identifier information of the UE, so that the base station identifies the UE.

It should be noted that, based on different downlink channel scenarios, the first message may include different content, for example, information such as a beam connection establishment request, an RRC connection establishment request, or a reestablishment request.

Step 560: The base station sends a response message of the first message to the base station at the sending moment of the first beam of the base station by using the first beam, to establish a communication connection.

The response message of the first message may be an RRC connection establishment acknowledgement message. After the UE receives the RRC connection establishment acknowledgement message, the UE completes establishment of an RRC connection to the base station.

It should be noted that, the response message of the first message may include different content based on different uplink channel scenarios, or include different information based on different content of the first message.

Optionally, after the terminal UE establishes the communication connection (the RRC connection) to the base station by using the first beam, the UE may send, to the base station, a maximum connection threshold of the UE, namely, a maximum quantity of beam connections that can be supported by the UE. The maximum connection threshold of the UE may be used as a reference value for the base station to determine whether the UE can further establish a beam connection, or may be used as a reference value for the base station to determine whether the UE can replace a beam connection.

It should be noted that, in this embodiment of the present invention, in an information exchange process after the UE determines the beam pair, both the UE and the base station choose to send instruction information at a receiving moment of a beam of the opposite party.

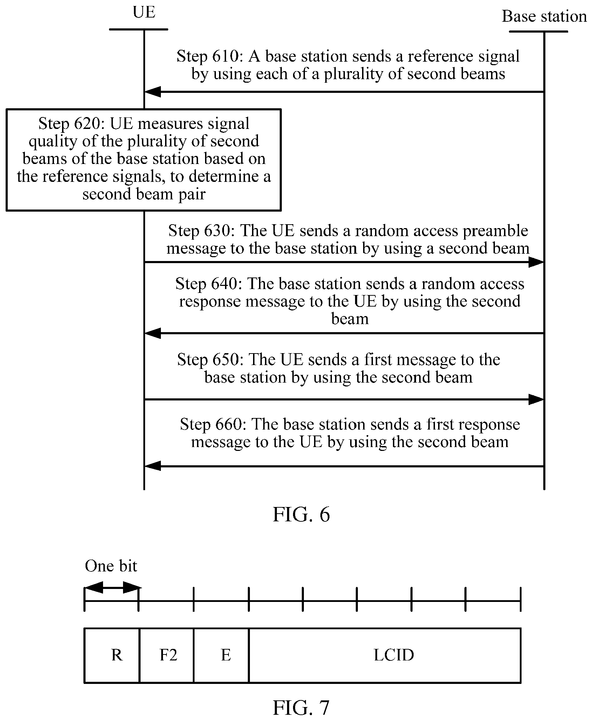

FIG. 6 is a signaling exchange diagram of a beam-based multi-connection communication method according to an embodiment of the present invention. As shown in FIG. 6, the method may include the following steps.

Step 610: A base station sends a reference signal to terminal UE by using each of a plurality of second beams, where the second beam of the base station is a beam other than a first beam of the base station in a first beam pair.

The reference signal is used by the terminal UE to perform channel estimation.

Step 620: The terminal UE measures signal quality of the plurality of second beams of the base station based on the reference signals, to determine a second beam pair.

The terminal UE receives the reference signals by using the plurality of second beams. The UE receives the reference signal sent on each of the plurality of second beams of the base station, to perform channel estimation on the plurality of second beams, and obtain attribute information, such as signal quality information, of the plurality of second beams.

The terminal UE measures the signal quality of the plurality of second beams of the base station based on the attribute information, to obtain measurement results.

The UE determines, in a plurality of second beams of the UE based on the measurement results, second beams respectively matching the second beams of the base station.

It should be noted that, a process in which the UE measures the plurality of beams of the base station may be periodic or may be triggered by the base station. Preferably, in consideration of accuracy and real-time performance of the measurement, in this embodiment of the present invention, the UE periodically measures the plurality of beams of the base station.

It may be understood that, the terminal UE may further determine the first beam pair in another manner. This is not limited herein in this embodiment of the present invention.

Step 630: The terminal UE sends a random access preamble message to the base station by using a second beam.

Step 640: The base station sends a random access response message to the terminal UE based on the random access preamble message by using the second beam.

Step 650: The terminal UE sends a first message to the base station based on the random access response message by using the second beam, where the first message may include identifier information of the terminal UE and beam establishment request information.

The first message may be a MAC CE message or an RRC message, and the identifier information of the UE may be a C-RNTI.

Optionally, when the first message is a MAC CE message, the MAC CE message includes a message subheader part and a payload part. The UE may reconfigure a value of a logical channel identifier (LCID) in a MAC CE subheader structure, to indicate information such as a beam establishment request, a beam establishment acknowledgement, or a beam establishment rejection. Alternatively, the UE may reconfigure a payload structure in the MAC CE message, to indicate information such as a beam establishment request, a beam establishment acknowledgement, or a beam establishment rejection.

As shown in FIG. 7, a structure of the MAC CE subheader part may include a reserved bit R field of one bit, an F2 field of one bit, an E field of one bit, and an LCID field of five bits. F2 is a format field used to indicate a length of a length field, E is an extension field, and the extension field is a flag bit indicating whether there is another field in a MAC header. The UE may select a value of an LCID corresponding to each index whose index value is 01011 to 11000, to indicate information such as a beam establishment request, a beam establishment acknowledgement, or a beam establishment rejection. A specific correspondence is specified in a protocol.

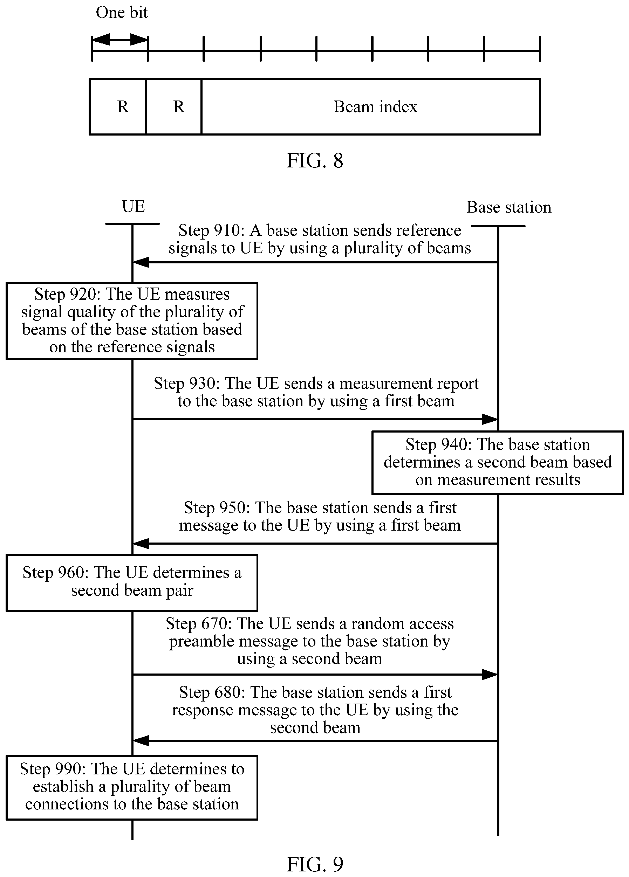

As shown in FIG. 8, a structure of the MAC CE payload part may include two reserved R bits and six newly added beam index bits. The UE may perform configuration to increase or decrease a quantity of R bits, to indicate information such as a beam establishment request, a beam establishment acknowledgement, or a beam establishment rejection. The beam index bit indicates a beam index to be connected. It should be noted that, based on a communication requirement, the quantity of R bits in the MAC CE payload part may be any number from 0 to 7. For example, if there are two R bits (namely, two bits), there are six beam index bits.

It should be noted that, a process of configuring the indication information may be the process shown in FIG. 7 and FIG. 8, or another configuration process may be used based on a design requirement. This is not limited herein in the present invention.

Optionally, when the first message is an RRC message, the UE may add indication information to the RRC message. The indication information is used to indicate information such as a beam connection establishment request, a beam connection establishment acknowledgement, or a beam connection establishment rejection.

Step 660: The base station sends a first response message to the UE based on the identifier information of the UE and the beam connection establishment request information by using the second beam, so that the UE establishes a second beam connection to the base station.

Optionally, the first response message may include beam connection establishment acknowledgement information, beam connection establishment rejection information, or RRC establishment acknowledgement information.

The base station determines, based on the identifier information of the UE, whether the UE has established an RRC connection to the base station.

If the UE does not establish an RRC connection to the base station, the base station sends the first response message to the UE. The first response message includes the beam establishment request information, to instruct the UE to establish an RRC connection to the base station.

Further, if the UE has established an RRC connection to the base station, the base station further identifies the second beam of the base station. The base station may identify the second beam of the base station based on a connection criterion of the base station. The criterion may include: ensuring that the signal quality is higher than a preset threshold, and/or the determined second beam and a first beam of the base station in a first communication connection (an RRC connection) do not belong to a same TRP, to ensure good signal quality after a beam connection is established, and further avoid a synchronous change of signals such as synchronous attenuation caused by a same TRP.

Optionally, when the second beam and a first beam in a first beam connection do not belong to a same TRP, the base station sends the first response message to the UE, to instruct the UE to establish the second beam connection to the base station.

When the second beam and a first beam in a first beam connection (an RRC connection) belong to a same TRP, the base station sends the first response message to the UE, to indicate a beam connection establishment rejection.

It should be noted that, the connection criterion of the base station may further include another type of information such as attribute information of the UE or a maximum connection threshold of the UE. If a quantity of beam connections of the UE reaches the maximum connection threshold, the base station may choose to reject establishment of a new beam connection, or choose to add a new beam connection by deleting an existing beam connection. If a quantity of beam connections of the UE does not reach the maximum connection threshold, the base station may choose to acknowledge establishment of a new beam connection.

The method in this embodiment of the present invention is based on the fact that the terminal has established the communication connection (the RRC connection) to the base station. Then, the terminal UE triggers establishment of another multi-beam communication connection by using a random access process.

FIG. 9 is a signaling exchange diagram of another beam-based multi-connection communication method according to an embodiment of the present invention. As shown in FIG. 9, the method may include the following steps.

Step 910: A base station sends reference signals to terminal UE by using a plurality of beams.

The reference signal may be a synchronization signal. The synchronization signal is used by the UE to complete downlink synchronization. After completing the downlink synchronization, an indication message, for example, an uplink resource allocated to the UE for transmitting data or control signaling, of the base station can be correctly obtained.

The base station sends synchronization signals to the UE by using a plurality of transmit beams. To be specific, one synchronization signal is transmitted on one transmit beam, and the synchronization signals transmitted on the transmit beams may be the same or different. In addition to the synchronization signal, there may also be a separate reference signal specially used for channel estimation on each beam.

Step 920: The terminal UE measures signal quality of the plurality of beams of the base station based on the reference signals.

The UE receives the reference signal sent on each of the plurality of beams of the base station, and performs channel estimation on the plurality of beams, to obtain attribute information, such as signal quality information, of the plurality of beams.

The terminal UE measures the signal quality of the plurality of beams of the base station based on the attribute information, to obtain measurement results.

It should be noted that, a process in which the UE measures the plurality of beams of the base station may be periodic or may be triggered by the base station. Preferably, in consideration of accuracy and real-time performance of the measurement, in this embodiment of the present invention, the UE periodically measures the plurality of beams of the base station.

Step 930: The terminal UE sends a measurement report to the base station by using a first beam, where the measurement report includes measurement results of the signal quality of the plurality of beams of the base station.

Step 940: The base station determines a second beam based on the measurement results.

The base station selects, according to a particular connection criterion, one beam from beams other than a first beam pair as the second beam based on the measurement results obtained through measurement by the terminal UE.

The criterion may include: ensuring that the signal quality of the beam is higher than a preset threshold, and/or the determined second beam and a first beam of the base station in a first communication connection (an RRC connection) do not belong to a same TRP, to ensure good signal quality after a beam connection is established, and further avoid a synchronous change of signals such as synchronous attenuation caused by a same TRP.

It may be understood that, the terminal UE may also determine the first beam pair in another manner and is not limited to a manner of step 910 to step 940. This is not limited herein in this embodiment of the present invention.

Step 950: The base station sends a first message to the terminal UE by using a first beam, where the first message includes first indication information.

When determining the second beam (a beam with better signal quality) based on the measurement results, the base station sends the first message to the UE. The first message may include the first indication information.

The first message may be an RRC message (such as an RRC reconfiguration message (English: RRC Connection Reconfiguration)), a Media Access Control (Media Access Control, MAC) layer control element (English: Media Access Control Control Element, MAC CE) message, or a physical downlink control channel order (Physical downlink control channel order, PDCCH order).

Optionally, when the first message is an RRC message, the base station adds random access channel-dedicated configuration information (English: rach-configdedicated) to the RRC message, to indicate a dedicated random access preamble resource, and further adds the first indication information. The first indication information may include instruction information such as beam establishment request information. The first indication information may further include index information of the second beam of the base station.

Optionally, when the first message is a MAC CE message, the MAC CE message may include a message subheader part and a payload part. The base station may configure a value of a logical channel identifier (LCID), to indicate information such as a dedicated random access preamble resource and a beam establishment request. The base station may further change a field structure of the MAC CE payload part, to indicate the index information of the second beam of the base station.

It should be noted that, for a process of configuring the first indication information, refer to the processes shown in FIG. 7 and FIG. 8, or another configuration process may be used based on a design requirement. This is not limited herein in the present invention.

Optionally, when the first message is a PDCCH order message, the base station may increase a quantity of bits of a digital copyright unique identifier (English: downlink control information, DCI) in the PDCCH order message, to indicate information such as the index information of the second beam of the base station and the beam establishment request.

It should be noted that, a beam index included in each message may be a complete beam index, or the base station may use a sequence index in the latest beam measurement result of the UE, to reduce system overheads. Table 1 is a table of comparison between a beam index and a beam measurement sequence index provided in this embodiment of the present invention.

**Table 1**

| Sequence index | Beam index |
|---|---|
| 0 | Beam 5 |
| 1 | Beam 3 |
| 2 | Beam 10 |
| 3 | Beam 8 |

As shown in Table 1, measurement results of the base station reported by the UE the last time include four beams. An order of the four beams in the measurement report is {beam 5, beam 3, beam 10, beam 8}. If the beam index indicated by the base station is 0, a target receive beam of the base station is the beam 5. If the indicated beam index is 2, a target receive beam of the base station is the beam 10.

Optionally, when the base station sends the first message to the UE by using a transmit beam other than the selected second beam, the first message may further include the index information of the second beam, so that the UE determines a second beam matching the second beam of the base station.

Step 960: The terminal UE determines a second beam pair according to the first indication information.

When the base station sends the first message to the terminal by using the second beam, the terminal UE identifies the second beam of the base station, and selects, from beams other than the first beam, the second beam matching the second beam of the base station, to determine the second beam pair.

When the base station sends the first message to the UE by using a transmit beam other than the first beam and the determined second beam, the terminal UE determines, according to the first indication information (such as the index information of the second beam) in the first message, the second beam matching the second beam of the base station, to determine the second beam pair.

Step 970: The terminal UE sends a random access preamble message to the base station.

Optionally, the second message may further include instruction information, so that the UE sends the random access preamble message to the base station, to perform a random access process. The instruction information may include random access resource information.

The terminal UE sends the random access preamble message to the base station according to the instruction information.

Step 980: The base station sends a random access response message to the terminal UE based on the random access preamble message by using the second beam, where the random access response message includes second indication information.

The second indication information may be used to indicate a beam establishment success. The random access response message may be an RRC response message, a MAC CE response message, or a PDCCH order response message.

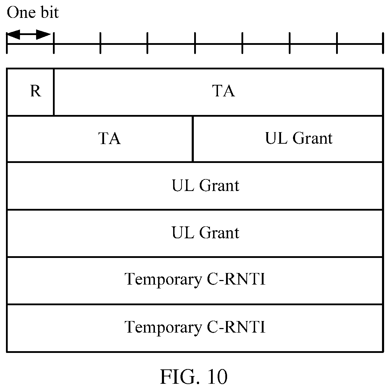

Optionally, before the base station sends the random access response message to the UE, the base station may perform indication by using a radio network temporary identifier (English: Radio Network Temporary Identity, RNTI) in the random access response message. As shown in FIG. 10, a message body of the random access response message may include an R field, a TA field, a UL-Grant field, and a temporary cell radio network temporary identifier (Temporary Cell Radio Network Temporary Identifier, Temp C-RNTI) field. A Temp C-RNTI indicates a temporary C-RNTI used by the UE in the random access process.

Optionally, the base station may set all bits of at least one of the UL-Grant field and the Temp C-RNTI field to a particular value (for example, set all the bits to 0) to indicate the beam establishment success. Alternatively, the base station may set a plurality of bits in the UL-Grant field and/or the Temp C-RNTI field to a particular combination. A specific process and manner in which the base station configures the message body of the random access response message based on an actual design requirement are not limited herein in this embodiment of the present invention.

Alternatively, the base station may perform indication by using information indicated by the C-RNTI. To be specific, the indication information may include a TA and indicate beam establishment success information.

Step 990: The terminal UE determines, according to the second indication information, to establish a communication connection to the base station, to implement a plurality of beam connections between the terminal UE and the base station.

The foregoing method in this embodiment of the present invention is based on the fact that the terminal has established the communication connection (the RRC connection) to the base station. Then, the base station triggers establishment of another multi-beam communication connection based on the measurement results of the terminal UE by using the random access process.

For a case in which the UE does not establish a communication connection (an RRC connection) to the base station, the UE and the base station may perform beam-based multi-connection communication by using a method in the following embodiment.

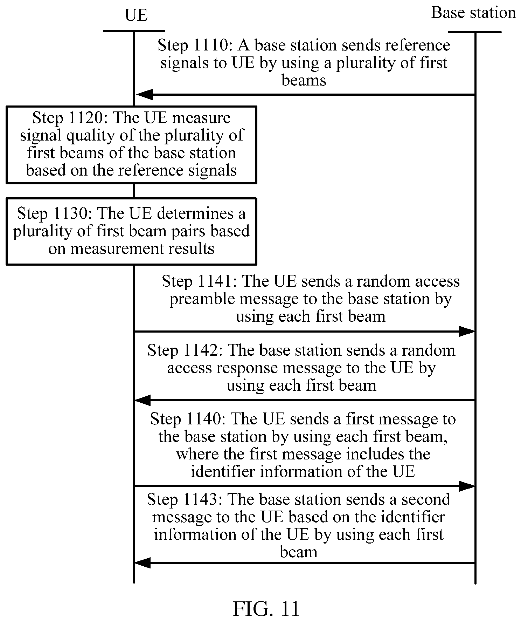

FIG. 11 is a signaling exchange diagram of still another beam-based multi-connection communication method according to an embodiment of the present invention. As shown in FIG. 11, the method may include the following steps.

Step 1110: A base station sends reference signals to terminal UE by using a plurality of first beams.

The reference signal is used by the terminal UE to perform channel estimation.

Step 1120: The terminal UE measure signal quality of the plurality of first beams of the base station based on the reference signals.

The terminal UE receives the reference signals by using a plurality of first beams. The UE receives the reference signal sent on each of the plurality of first beams of the base station, to perform channel estimation on the plurality of first beams, to obtain attribute information, such as signal quality information, of the plurality of first beams.

The terminal UE measures the signal quality of the plurality of first beams of the base station based on the attribute information of the first beam, to obtain measurement results.

It should be noted that, a process in which the UE measures the plurality of beams of the base station may be periodic or may be triggered by the base station. Preferably, in consideration of accuracy and real-time performance of the measurement, in this embodiment of the present invention, the UE periodically measures the plurality of beams of the base station.

Step 1130: The terminal UE determines a plurality of first beam pairs based on measurement results.

The first beam pair includes a first beam of the terminal UE and the first beam of the base station.

It may be understood that, the terminal UE may also determine the plurality of first beam pairs in another manner and is not limited to a manner of step 1110 to step 1130. This is not limited herein in this embodiment of the present invention.

Step 1140: The terminal UE sends a first message to the base station by using each first beam, where the first message may include identifier information of the terminal UE.

The first message may be an RRC message (such as an RRC establishment request message) or a MAC CE message.

Optionally, before the UE sends the first message to the base station by using each first beam, the following steps are included:
Step 1141: The UE sends a random access preamble message to the base station by using each first beam.
Step 1142: The base station sends a random access response message to the UE based on the random access preamble message by using each first beam.
   Go back to step 1140: The UE sends, to the base station by using each first beam, an RRC message or a MAC CE message carrying identifier information of the UE.
Step 1143: The base station sends a second message to the UE based on the identifier information of the UE by using each first beam.

The second message may be an RRC message (such as an RRC connection establishment message) or a MAC CE response message. The second message is used to establish an RRC connection or establish a beam connection.

When the base station determines, based on the identifier information of the UE, that a working status of the UE is an idle mode, the UE receives an RRC connection establishment message sent by the base station; or
when the base station determines, based on the identifier information, that a working status of the UE is a connected mode, or when the UE is in an idle mode, but the base station identifies that an RRC connection establishment message is already sent to the UE, the UE receives a beam connection establishment message sent by the base station.

Step 1144: The UE establishes a communication connection to the base station based on the second message.

When the terminal UE receives the RRC connection establishment message sent by the base station, the terminal UE establishes an RRC connection to the base station; or
when the terminal UE receives the beam connection establishment message sent by the base station, the terminal UE establishes a beam connection to the base station.

The foregoing method in this embodiment of the present invention is based on the fact that the terminal does not establish a communication connection (an RRC connection) to the base station. To be specific, when the terminal UE is in the idle mode, the terminal initiates a plurality of random access processes, to be specific, a next random access process is initiated before a previous random process ends, and the base station instructs, based on the connected mode of the terminal, the terminal to establish an RRC connection and establish a plurality of beam connections.

In the beam-based multi-connection communication method provided in the foregoing embodiment, after the UE establishes the RRC connection to the terminal, at least one beam connection is established by using a random access process triggered by the base station or the UE, or when the UE does not establish an RRC connection to the terminal, establishment of at least one beam connection is completed as a random access process is performed. Based on the plurality of beam connections, system overheads for performing beam communication restoration by the UE can be reduced after communication on a single beam is interrupted, and a data transmission interruption between the base station and the UE can be avoided, thereby ensuring normal communication between the base station and the UE.

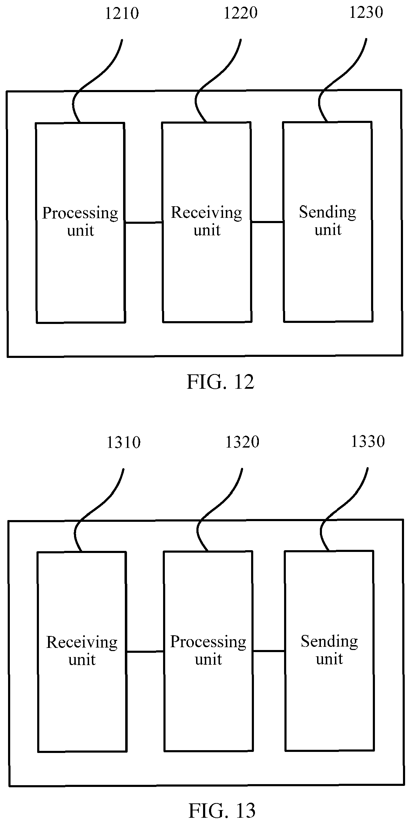

Corresponding to the foregoing beam-based multi-connection communication, an embodiment of the present invention further provides a terminal. The terminal communicates with and is connected to the network device by using a first beam. As shown in FIG. 12, the terminal may include a processing unit 1210, a receiving unit 1220, and a sending unit 1230.

The processing unit 1210 is configured to establish a communication connection to a base station by using a second beam.

The receiving unit 1220 is configured to receive, by using a plurality of second beams, a reference signal sent on each of a plurality of beams of the base station.

The processing unit 1210 is further configured to: measure signal quality of the plurality of beams of the base station based on the reference signals; and determine a second beam pair based on measurement results.

The first beam is a beam in a first beam pair, and the first beam is a beam used by the terminal. The second beam is a beam in the second beam pair, and the second beam is a beam used by the terminal.

The sending unit 1230 is configured to send a random access preamble message to the base station by using the second beam.

The receiving unit 1220 is configured to receive, by using the second beam, a random access response message that is sent by the base station based on the random access preamble message.

The sending unit 1230 is further configured to send a first message to the base station based on the random access response message by using the second beam, where the first message includes identifier information of the base station and beam connection establishment request information.

The receiving unit 1220 is further configured to receive, by using the second beam, a first response message that is sent by the base station based on the identifier information of the terminal and the beam connection establishment request information, so that the terminal establishes the communication connection to the base station.

Optionally, the first response message includes beam connection establishment information.

The receiving unit 1220 is specifically configured to receive, by using the second beam, the beam connection establishment information that is sent by the base station based on the identifier information of the terminal and the beam establishment request information, to instruct the terminal to establish the communication connection to the base station.

Optionally, the receiving unit 1220 is further configured to receive, by using a plurality of local beams, the reference signals sent on the plurality of beams of the base station.

The processing unit 1210 is further configured to measure the signal quality of the plurality of beams of the base station based on the reference signals.

The sending unit 1230 is further configured to send a measurement report to the base station by using the first beam, where the measurement report includes the measurement results of the signal quality of the plurality of beams of the base station.

The receiving unit 1220 is further configured to receive, by using the first beam, a second message that is sent by the base station based on the measurement results, where the second message includes first indication information.

The processing unit 1210 is further configured to determine the second beam pair according to the first indication information.

Optionally, the first indication information includes index information of a second beam in the plurality of beams of the base station.

The processing unit 1210 is specifically configured to determine the second beam pair based on the index information of the second beam.

Optionally, the first indication information further includes instruction information.

The sending unit 1230 is further configured to send a random access preamble message to the base station according to the instruction information by using the second beam.

The receiving unit 1220 is further configured to receive, by using the second beam, a random access response message that is sent by the base station based on the random access preamble message, where the random access response message includes second indication information.

The processing unit 1210 is further configured to determine, according to the second indication information, to establish the communication connection to the network device.

Functions of the functional modules of the terminal may be implemented by using the steps in FIG. 6 and FIG. 9. Therefore, a specific working process of the terminal provided in the foregoing embodiment of the present invention is not described in detail herein again.

Corresponding to the foregoing beam-based multi-connection communication, an embodiment of the present invention further provides another terminal. The terminal is in an idle mode. As shown in FIG. 13, the terminal may include a receiving unit 1310, a processing unit 1320, and a sending unit 1330.

The processing unit 1320 is configured to determine a plurality of first beam pairs, where the first beam pair includes a first beam of the terminal device and a first beam of a base station.

The sending unit 1330 is configured to send a first message to the base station by using each first beam, where the first message includes identifier information of the terminal.

The receiving unit 1310 is further configured to receive, by using each first beam, a second message that is sent by the base station based on the identifier information.

The processing unit 1320 is further configured to establish a communication connection to the base station based on the second message.

Optionally, the receiving unit 1310 is further configured to receive, by using each beam of the terminal, a reference signal sent on each of a plurality of beams of the base station.

The processing unit 1320 is specifically configured to determine the plurality of first beam pairs based on the reference signals.

Optionally, the sending unit 1330 is further configured to send the first message to the base station by using a second beam of the terminal other than the first beam, where the first message includes the identifier information of the terminal and index information of the first beam.

The receiving unit 1310 is further configured to receive, by using each first beam, a second message that is sent by the base station based on the identifier information and the index information of the first beam.

Optionally, the second message is an RRC connection establishment message, or the second message is a beam connection establishment message.

The receiving unit 1310 is specifically configured to: when the processing unit 1320 determines, based on the identifier information, that a working status of the terminal is the idle mode, receive, by the receiving unit 1310 by using one first beam, the RRC connection establishment message sent by the base station, so that the processing unit 1320 establishes an RRC connection to the base station; or
when the processing unit 1320 determines, based on the identifier information, that a working status of the terminal is a connected mode, receive, by the receiving unit 1310 by using the plurality of first beams, the beam connection establishment message sent by the base station, so that the processing unit 1320 establishes a plurality of beam connections to the base station.

Optionally, when the receiving unit 1310 receives the RRC connection establishment message sent by the base station, the processing unit 1320 establishes the RRC connection to the base station; or
when the receiving unit 1310 receives the beam connection establishment message sent by the base station, the processing unit establishes the beam connection to the base station.

Optionally, before the sending unit 1330 sends the first message to the base station by using each first beam,
the sending unit 1330 is further configured to send a random access preamble message to the base station by using each first beam; and
the receiving unit 1310 is further configured to receive, by using each first beam, a random access response message that is sent by the base station based on the random access preamble message.

Optionally, the sending unit 1330 is specifically configured to: simultaneously send the random preamble access messages to the base station by using the first beams; or successively send the random preamble access messages to the base station by using the first beams.

Functions of the functional modules of the terminal may be implemented by using the steps in FIG. 11. Therefore, a specific working process of the terminal provided in the foregoing embodiment of the present invention is not described in detail herein again.

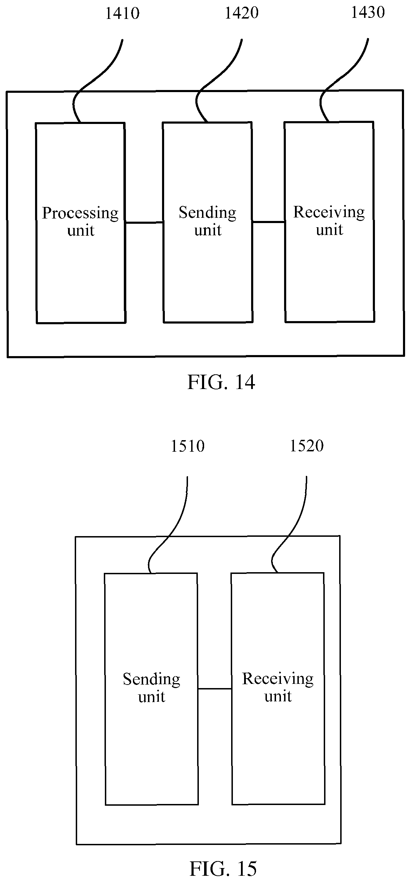

Corresponding to the foregoing beam-based multi-connection communication method, an embodiment of the present invention further provides a base station. The base station communicates with and is connected to a terminal by using a first beam. As shown in FIG. 14, the base station may include a processing unit 1410, a sending unit 1420, and a receiving unit 1430.

The processing unit 1410 is configured to establish a communication connection to the terminal by using a second beam.

The sending unit 1420 is configured to send reference signals to the terminal by using a plurality of second beams, so that the terminal measures signal quality of the plurality of second beams, to determine a second beam pair.

The first beam is a beam in a first beam pair, and the first beam is a beam used by the base station.

The second beam is a beam in the second beam pair, and the second beam is a beam used by the base station.

The receiving unit 1430 is configured to receive, by using the second beam, a random access preamble message sent by the terminal.

The sending unit 1420 is further configured to send a random access response message to the terminal based on the random access preamble message by using the second beam.

The receiving unit 1430 is further configured to receive, by using the second beam, a first message that is sent by the terminal based on the random access response message, where the first message includes identifier information of the terminal and beam connection establishment request information.

The sending unit 1420 is further configured to send a first response message to the terminal based on the identifier information of the terminal and the beam connection establishment request information by using the second beam, so that the processing unit 1410 establishes the communication connection to the terminal by using the second beam.

Optionally, the first response message may include beam connection establishment information.

The sending unit 1420 is specifically configured to send the beam connection establishment information to the terminal based on the identifier information of the terminal and the beam connection establishment request information by using the second beam.

Optionally, before the processing unit 1410 establishes the communication to the terminal by using the second beam,
the sending unit 1420 is further configured to send the reference signal to the terminal by using the first beam, so that the terminal measures signal quality of a plurality of beams of the base station;
the receiving unit 1430 is further configured to receive, by using the first beam, a measurement report sent by the terminal, where the measurement report includes measurement results of the signal quality of the plurality of beams of the base station; and
the sending unit 1420 is further configured to send a second message to the terminal based on the measurement results by using the first beam, where the second message includes first indication information, so that the terminal determines the second beam pair according to the first indication information.

Optionally, the first indication information includes index information of the second beam of the base station, so that the terminal determines the second beam pair based on the index information.

Optionally, the first indication information further includes instruction information.

The receiving unit 1420 is further configured to receive, by using the second beam, a random access preamble message that is sent by the terminal according to the instruction information.

The sending unit 1430 is further configured to send a random access response message to the terminal based on the random access preamble message by using the second beam, where the random access response message includes second indication information, so that the terminal determines, according to the second indication information, to establish the communication connection to the base station.

Functions of the functional modules of the base station may be implemented by using the steps in FIG. 6 and FIG. 9. Therefore, a specific working process of the base station provided in the foregoing embodiment of the present invention is not described in detail herein again.

Corresponding to the foregoing beam-based multi-connection communication method, an embodiment of the present invention further provides another base station. The base station communicates with and is connected to a terminal by using a first beam. As shown in FIG. 15, the base station may include a sending unit 1510 and a receiving unit 1520.

The receiving unit 1520 is configured to receive a first message that is sent by the terminal after the terminal determines a plurality of first beam pairs, where the first message includes identifier information of the terminal.

The sending unit 1510 is configured to send a second message to the terminal based on the identifier information, so that the terminal establishes a communication connection to the terminal based on the second message.

Optionally, the receiving unit 1520 is specifically configured to receive, by using a first beam of the base station, the first message that is sent by the terminal after the terminal determines the plurality of first beam pairs, where the first beam is a beam in the first beam pair.

Optionally, the receiving unit 1520 is further configured to receive, by using a second beam of the base station, the first message that is sent by the terminal after the terminal determines the plurality of first beam pairs, where the first message includes the identifier information of the terminal and index information of a first beam of the terminal in the first beam pair, and the second beam is a beam other than the first beam.

The sending unit 1510 is specifically configured to send the second message to the terminal based on the identifier information of the terminal and the index information of the first beam of the terminal.

Optionally, the network device further includes a processing unit 1530.

The second message is an RRC connection establishment message, or the second message is a beam connection establishment message.

The sending unit 1510 is specifically configured to: when the processing unit 1530 determines, based on the identifier information, that a working status of the terminal is an idle mode, send, by the sending unit 1510, the RRC connection establishment message to the terminal by using one first beam, so that the terminal establishes an RRC connection to the processing unit 1530; or
when the processing unit 1530 determines, based on the identifier information, that a working status of the terminal is a connected mode, send, by the sending unit 1510, the beam connection establishment message to the terminal by using the plurality of first beams, so that the terminal establishes a plurality of beam connections to the processing unit 1530.

Optionally, before the receiving unit 1520 receives, by using the plurality of first beams, the first message sent by the terminal,
the receiving unit 1520 is further configured to receive, by using the plurality of first beams, random preamble access messages sent by the terminal; and
the sending unit 1510 is further configured to send random access response messages to the terminal device based on the random access preamble messages by using the plurality of first beams.

Optionally, the receiving unit 1520 is specifically configured to: simultaneously receive, by using the plurality of first beams, the random preamble access messages sent by the terminal; or successively receive, by using the plurality of first beams, the random preamble access messages sent by the terminal.

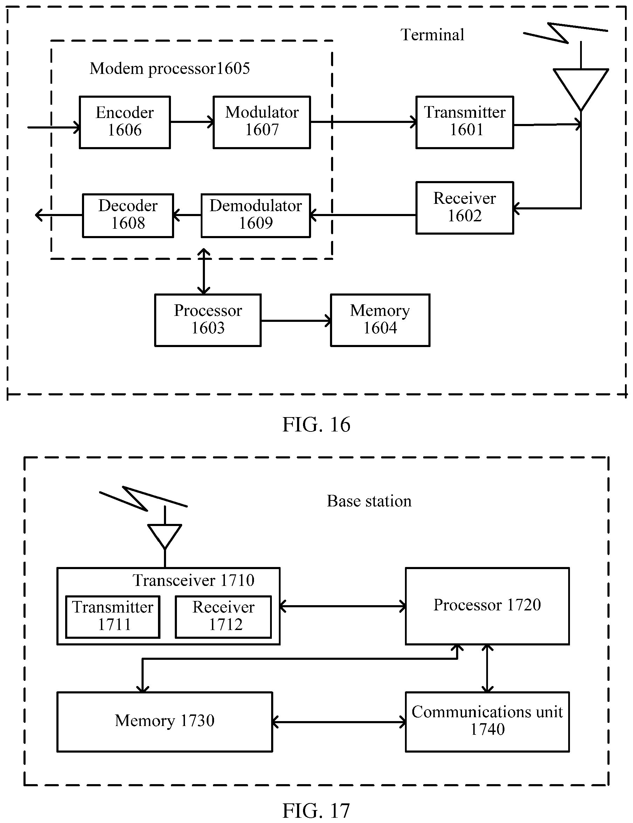

Corresponding to FIG. 12 and FIG. 13, an embodiment of the present invention provides still another terminal. As shown in FIG. 16, the terminal may include a transmitter 1601, a receiver 1602, a processor 1603, and a modem processor 1605.

The transmitter 1601 adjusts the output sample and generates an uplink signal, where the uplink signal is transmitted to the base station in the foregoing embodiment by using an antenna, for example, performs steps for communication between the terminal and the base station in FIG. 6, FIG. 9, and FIG. 11. On a down link, a downlink signal transmitted by the base station in the foregoing embodiment is received by using the antenna. The receiver 1602 adjusts the signal received from the antenna and provides an input sample, for example, performs steps for communication between the terminal and the base station in FIG. 6, FIG. 9, and FIG. 11. In the modem processor 1605, an encoder 1606 receives service data and a signaling message that need to be sent on an up link, and processes (for example, formats, encodes, and interleaves) the service data and the signaling message. A modulator 1607 further processes (for example, performs symbol mapping on and modulates) the encoded service data and signaling message and provides an output sample. A demodulator 1609 processes (for example, demodulates) the input sample and provides symbol estimation. The decoder 1608 processes (for example, deinterleaves and decodes) the symbol estimation and provides decoded data and a decoded signaling message to be sent to the terminal. The encoder 1606, the modulator 1607, the demodulator 1609, and the decoder 1608 may be implemented by the integrated modem processor 1605. The foregoing device performs processing based on a radio access technology (for example, an access technology in LTE, 5G, and another evolved system) used by the base station.

The terminal may further include a memory 1604, configured to store program code and data used by the terminal. The processor 1603 controls and manages an action of the terminal, and is configured to perform processing performed by the terminal in the foregoing embodiment, for example, perform step 620, step 920, step 960, step 990, step 1120, and step 1130 in FIG. 6, FIG. 9, and FIG. 11.

Corresponding to FIG. 14 and FIG. 15, an embodiment of the present invention provides still another base station. As shown in FIG. 17, the base station may include a transceiver 1710 and a processor 1720.

The transceiver 1710 is configured to: support message receiving and sending between the base station and the terminal in the foregoing embodiment, and support radio communication between the terminal and another terminal. The transceiver 1710 may include a transmitter 1711 and a receiver 1712. The processor 1720 performs various functions for communication with the terminal in FIG. 6, FIG. 9, and FIG. 11. On an up link, an uplink signal from the terminal is received by using an antenna, demodulated by the transceiver 1710, and further processed by the processor 1720, to restore service data and signaling information sent by the terminal. On a down link, service data and a singling message are processed by the processor 1720, for example, step 940 in FIG. 9, and are demodulated by the transceiver 1710 to generate a downlink signal. The downlink signal is transmitted to the terminal by using an antenna.

The base station may further include a memory 1730, configured to store program code and data of the base station; and a communications unit 1740, configured to support communication with another network entity, for example, configured to support communication between the base station and another communications network entity such as a core network.

It should be noted that, the processor of each of the base station and the terminal configured to perform the present invention may be a central processing unit (CPU), a general-purpose processor, a digital signal processor (English: digital signal processing, DSP), an application-specific integrated circuit (English: application-specific integrated circuit, ASIC), a field programmable gate array (English: field-programmable gate array, FPGA), or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor.

The memory may be a volatile memory (English: volatile memory), such as a random access memory (English: random-access memory, RAM); or may be a non-volatile memory (English: non-volatile memory), such as a read-only memory (English: read-only memory, ROM), a flash memory (English: flash memory), a hard disk drive (English: hard disk drive, HDD), or a solid-state drive (English: solid-state drive, SSD); or may be a combination of the foregoing types of memories; or the like.

Steps of methods or algorithms described in the embodiments disclosed in this specification may be implemented by hardware, a software module executed by a processor, or a combination thereof. The software instruction may be formed by a corresponding software module. The software module may be stored in a random access memory, a flash memory, a read-only memory, an erasable programmable read-only memory (English: erasable programmable read-only memory, EPROM), an electrically erasable programmable read-only memory (English: electrically erasable programmable read-only memory, EEPROM), a hard disk, a compact disc read-only memory (English: compact disc read-only memory, CD-ROM), or a storage medium in any other form well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in user equipment. Certainly, the processor and the storage medium may exist in the user equipment as discrete components.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium.

The objectives, technical solutions, and beneficial effects of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made based on the technical solutions of the present invention shall fall within the protection scope of the present invention.

## Claims

1. A beam-based multi-connection communication method, wherein a terminal device communicates with and is connected to a network device by using a first beam, and the method comprises:
establishing, by the terminal device, a communication connection to the network device by using a second beam.

2. The method according to claim 1, wherein the first beam is a beam in a first beam pair, and the first beam is a beam used by the terminal device;
the second beam is a beam in a second beam pair, and the second beam is a beam used by the terminal device; and
before the establishing, by the terminal device, communication to the network device by using a second beam, the method further comprises:
receiving, by the terminal device by using the second beam, a reference signal sent on each of a plurality of beams of the network device;
measuring, by the terminal device, signal quality of the plurality of beams of the network device based on the reference signals; and
determining, by the terminal device, the second beam pair based on measurement results.

3. The method according to claim 2, wherein the establishing, by the terminal device, communication to the network device by using a second beam specifically comprises:
sending, by the terminal device, a random access preamble message to the network device by using the second beam;
receiving, by the terminal device by using the second beam, a random access response message that is sent by the network device based on the random access preamble message;
sending, by the terminal device, a first message to the network device based on the random access response message by using the second beam, wherein the first message comprises identifier information of the terminal device and beam connection establishment request information; and
receiving, by the terminal device by using the second beam, a first response message that is sent by the network device based on the identifier information of the terminal device and the beam connection establishment request information, so that the terminal device establishes the communication connection to the network device.

4. The method according to claim 3, wherein the first response message comprises beam connection establishment information; and
the receiving, by the terminal device by using the second beam, a first response message that is sent by the network device based on the identifier information of the terminal device and the beam connection establishment request information specifically comprises:
receiving, by the terminal device by using the second beam, the beam connection establishment information that is sent by the network device based on the identifier information of the terminal device and the beam establishment request information, to instruct the terminal device to establish the communication connection to the network device.

5. The method according to claim 2, wherein before the establishing, by the terminal device, communication to the network device by using a second beam, the method further comprises:
receiving, by the terminal device by using a plurality of beams, the reference signals sent on the plurality of beams of the network device;
measuring, by the terminal device, the signal quality of the plurality of beams of the network device based on the reference signals;
sending, by the terminal device, a measurement report to the network device by using the first beam, wherein the measurement report comprises the measurement results of the signal quality of the plurality of beams of the network device;
receiving, by the terminal device by using the first beam, a second message that is sent by the network device based on the measurement results, wherein the second message comprises first indication information; and
determining, by the terminal device, the second beam pair according to the first indication information.

6. The method according to claim 5, wherein the first indication information comprises index information of a second beam in the plurality of beams of the network device; and
the determining, by the terminal device, the second beam pair according to the first indication information specifically comprises:
determining, by the terminal device, the second beam pair based on the index information of the second beam.

7. The method according to claim 6, wherein the first indication information further comprises instruction information; and
the establishing, by the terminal device, communication to the network device by using a second beam specifically comprises:
sending, by the terminal device, a random access preamble message to the network device according to the instruction information by using the second beam;
receiving, by the terminal device by using the second beam, a random access response message that is sent by the network device based on the random access preamble message, wherein the random access response message comprises second indication information; and
determining, by the terminal device according to the second indication information, to establish the communication connection to the network device.

8. A beam-based multi-connection communication method, wherein the method comprises:
determining, by a terminal device, a plurality of first beam pairs, wherein the first beam pair comprises a first beam of the terminal device and a first beam of a network device;
sending, by the terminal device, a first message to the network device by using each first beam, wherein the first message comprises identifier information of the terminal device;
receiving, by the terminal device by using each first beam, a second message that is sent by the network device based on the identifier information; and
establishing, by the terminal device, a communication connection to the network device based on the second message.

9. The method according to claim 8, wherein the determining, by a terminal device, a plurality of first beam pairs specifically comprises:
receiving, by the terminal device by using each beam of the terminal device, a reference signal sent on each of a plurality of beams of the network device; and
determining, by the terminal device, the plurality of first beam pairs based on the reference signals.

10. The method according to claim 8, wherein after the determining, by a terminal device, a plurality of first beam pairs, the method further comprises:
sending, by the terminal device, the first message to the network device by using a second beam of the terminal device other than the first beam, wherein the first message comprises the identifier information of the terminal device and index information of the first beam; and
receiving, by the terminal device by using each first beam, a second message that is sent by the network device based on the identifier information and the index information of the first beam.

11. The method according to claim 8, wherein the second message is an RRC connection establishment message, or the second message is a beam connection establishment message; and
the receiving, by the terminal device by using the plurality of first beams, second messages that are sent by the network device based on the identifier information specifically comprises:
when the network device determines, based on the identifier information, that a working status of the terminal device is an idle mode, receiving, by the terminal device by using one first beam, the RRC connection establishment message sent by the network device, so that the terminal device establishes an RRC connection to the network device; or
when the network device determines, based on the identifier information, that a working status of the terminal device is a connected mode, receiving, by the terminal device by using the plurality of first beams, the beam connection establishment messages sent by the network device, so that the terminal device establishes a plurality of beam connections to the network device.

12. The method according to claim 11, wherein the establishing, by the terminal device, a communication connection to the network device based on the second message specifically comprises:
when the terminal device receives the RRC connection establishment message sent by the network device, establishing, by the terminal device, the RRC connection to the network device; or
when the terminal device receives the beam connection establishment message sent by the network device, establishing, by the terminal device, the beam connection to the network device.

13. The method according to claim 8, wherein before the sending, by the terminal device, a first message to the network device by using each first beam, the method further comprises:
sending, by the terminal device, a random access preamble message to the network device by using each first beam; and
receiving, by the terminal device by using each first beam, a random access response message that is sent by the network device based on the random access preamble message.

14. The method according to claim 13, wherein the sending, by the terminal device, a random access preamble message to the network device by using each first beam specifically comprises:
simultaneously sending, by the terminal device, the random preamble access messages to the network device by using the first beams; or
successively sending, by the terminal device, the random preamble access messages to the network device by using the first beams.

15. A beam-based multi-connection communication method, wherein a network device communicates with and is connected to a terminal device by using a first beam, and the method comprises:
establishing, by the network device, a communication connection to the terminal device by using a second beam.

16. The method according to claim 15, wherein the first beam is a beam in a first beam pair, and the first beam is a beam used by the network device;
the second beam is a beam in a second beam pair, and the second beam is a beam used by the network device; and
before the establishing, by the network device, a communication connection to the terminal device by using a second beam, the method further comprises:
sending, by the network device, reference signals to the terminal device by using a plurality of second beams, so that the terminal device measures signal quality of the plurality of second beams, to determine the second beam pair.

17. The method according to claim 16, wherein the establishing, by the network device, communication to the terminal device by using a second beam specifically comprises:
receiving, by the network device by using the second beam, a random access preamble message sent by the terminal device;
sending, by the network device, a random access response message to the terminal device based on the random access preamble message by using the second beam;
receiving, by the network device by using the second beam, a first message that is sent by the terminal device based on the random access response message, wherein the first message comprises identifier information of the terminal device and beam connection establishment request information; and
sending, by the network device, a first response message to the terminal device based on the identifier information of the terminal device and the beam connection establishment request information by using the second beam, so that the network device establishes the communication connection to the terminal device by using the second beam.

18. The method according to claim 17, wherein the first response message comprises beam connection establishment information; and
the sending, by the network device, a first response message to the terminal device based on the identifier information of the terminal device and the beam connection establishment request information by using the second beam specifically comprises:
sending, by the network device, the beam connection establishment information to the terminal device based on the identifier information of the terminal device and the beam connection establishment request information by using the second beam.

19. The method according to claim 16, wherein before the establishing, by the network device, communication to the terminal device by using a second beam, the method further comprises:
sending, by the network device, the reference signals to the terminal device by using a plurality of beams, so that the terminal device measures signal quality of the plurality of beams of the network device;
receiving, by the network device by using the first beam, a measurement report sent by the terminal device, wherein the measurement report comprises measurement results of the signal quality of the plurality of beams of the network device; and
after determining the second beam based on the measurement results, sending, by the network device, a second message to the terminal device by using the first beam, wherein the second message comprises first indication information, so that the terminal device determines the second beam pair according to the first indication information.

20. The method according to claim 19, wherein the first indication information comprises index information of the second beam of the network device, so that the terminal device determines the second beam pair based on the index information.

21. The method according to claim 20, wherein the first indication information further comprises instruction information; and
the establishing, by the network device, communication to the terminal device by using a second beam specifically comprises:
receiving, by the network device by using the second beam, a random access preamble message that is sent by the terminal device according to the instruction information; and
sending, by the network device, a random access response message to the terminal device based on the random access preamble message by using the second beam, wherein the random access response message comprises second indication information, so that the terminal device determines, according to the second indication information, to establish the communication connection to the network device.

22. A beam-based multi-connection communication method, wherein the method comprises:
receiving, by a network device, a first message that is sent by a terminal device after the terminal device determines a plurality of first beam pairs, wherein the first message comprises identifier information of the terminal device; and
sending, by the network device, a second message to the terminal device based on the identifier information of the terminal device, so that the terminal device establishes a communication connection to the network device based on the second message.

23. The method according to claim 22, wherein the receiving, by a network device, a first message that is sent by a terminal device after the terminal device determines a plurality of first beam pairs specifically comprises:
receiving, by the network device by using a first beam of the network device, the first message that is sent by the terminal device after the terminal device determines the plurality of first beam pairs, wherein the first beam of the network device is a beam in the first beam pair.

24. The method according to claim 22, wherein the method further comprises:
receiving, by the network device by using a second beam of the network device, the first message that is sent by the terminal device after the terminal device determines the plurality of first beam pairs, wherein the first message comprises the identifier information of the terminal device and index information of a first beam of the terminal device in the first beam pair, and the second beam of the network device is a beam other than the first beam; and
the sending, by the network device, a second message to the terminal device based on the identifier information of the terminal device specifically comprises:
sending, by the network device, the second message to the terminal device based on the identifier information of the terminal device and the index information of the first beam of the terminal device.

25. The method according to claim 22, wherein the second message is an RRC connection establishment message, or the second message is a beam connection establishment message; and
the sending, by the network device, second messages to the terminal device based on the identifier information by using a plurality of first beams specifically comprises:
when the network device determines, based on the identifier information, that a working status of the terminal device is an idle mode, sending, by the network device, the RRC connection establishment message to the terminal device by using one first beam, so that the terminal device establishes an RRC connection to the network device; or
when the network device determines, based on the identifier information, that a working status of the terminal device is a connected mode, sending, by the network device, the beam connection establishment messages to the terminal device by using the plurality of first beams, so that the terminal device establishes a plurality of beam connections to the network device.

26. The method according to claim 25, wherein before the receiving, by a network device by using a plurality of first beams, a first message sent by a terminal device, the method further comprises:
receiving, by the network device by using the plurality of first beams, random preamble access messages sent by the terminal device; and
sending, by the network device, random access response messages to the terminal device based on the random access preamble messages by using the plurality of first beams.

27. The method according to claim 26, wherein the receiving, by the network device by using the plurality of first beams, random access preamble messages sent by the terminal device specifically comprises:
simultaneously receiving, by the network device by using the plurality of first beams, the random preamble access messages sent by the terminal device; or
successively receiving, by the network device by using the plurality of first beams, the random preamble access messages sent by the terminal device.

28. A terminal device, wherein the terminal device communicates with and is connected to a network device by using a first beam, and the terminal device comprises:
a processing unit, configured to establish a communication connection to the network device by using a second beam.

29. The terminal device according to claim 28, wherein the terminal device further comprises a receiving unit;
the receiving unit is configured to receive, by using a plurality of second beams, a reference signal sent on each of a plurality of beams of the network device; and
the processing unit is further configured to: measure signal quality of the plurality of beams of the network device based on the reference signals; and
determine the second beam pair based on measurement results, wherein
the first beam is a beam in a first beam pair, and the first beam is a beam used by the terminal device; and
the second beam is a beam in a second beam pair, and the second beam is a beam used by the terminal device.

30. The terminal device according to claim 29, wherein the terminal device further comprises a sending unit;
the sending unit is configured to send a random access preamble message to the network device by using the second beam;
the receiving unit is configured to receive, by using the second beam, a random access response message that is sent by the network device based on the random access preamble message;
the sending unit is further configured to send a first message to the network device based on the random access response message by using the second beam, wherein the first message comprises identifier information of the terminal device and beam connection establishment request information; and
the receiving unit is further configured to receive, by using the second beam, a first response message that is sent by the network device based on the identifier information of the terminal device and the beam connection establishment request information, so that the terminal device establishes the communication connection to the network device.

31. The terminal device according to claim 30, wherein the first response message comprises beam connection establishment information; and
the receiving unit is specifically configured to receive, by using the second beam, the beam connection establishment information that is sent by the network device based on the identifier information of the terminal device and the beam establishment request information, to instruct the terminal device to establish the communication connection to the network device.

32. The terminal device according to claim 29, wherein before the processing unit establishes the communication to the network device by using the second beam,
the receiving unit is further configured to receive, by using a plurality of beams, the reference signals sent on the plurality of beams of the network device;
the processing unit is further configured to measure the signal quality of the plurality of beams of the network device based on the reference signals;
the sending unit is further configured to send a measurement report to the network device by using the first beam, wherein the measurement report comprises the measurement results of the signal quality of the plurality of beams of the network device;
the receiving unit is further configured to receive, by using the first beam, a second message that is sent by the network device based on the measurement results, wherein the second message comprises first indication information; and
the processing unit is further configured to determine the second beam pair according to the first indication information.

33. The terminal device according to claim 32, wherein the first indication information comprises index information of a second beam in the plurality of beams of the network device; and
the processing unit is specifically configured to determine the second beam pair based on the index information.

34. The terminal device according to claim 33, wherein the first indication information further comprises instruction information;
the sending unit is further configured to send a random access preamble message to the network device according to the instruction information by using the second beam;
the receiving unit is further configured to receive, by using the second beam, a random access response message that is sent by the network device based on the random access preamble message, wherein the random access response message comprises second indication information; and
the processing unit is further configured to determine, according to the second indication information, to establish the communication connection to the network device.

35. A terminal device, wherein the terminal device comprises:
a processing unit, configured to determine a plurality of first beam pairs, wherein the first beam pair comprises a first beam of the terminal device and a first beam of a network device;
a sending unit, configured to send a first message to the network device by using each first beam, wherein the first message comprises identifier information of the terminal device;
a receiving unit is further configured to receive, by using each first beam, a second message that is sent by the network device based on the identifier information; and
the processing unit is further configured to establish a communication connection to the network device based on the second message.

36. The terminal device according to claim 35, wherein
the receiving unit is further configured to receive, by using each beam of the terminal device, a reference signal sent on each of a plurality of beams of the network device; and
the processing unit is specifically configured to determine the plurality of first beam pairs based on the reference signals.

37. The terminal device according to claim 35, wherein
the sending unit is further configured to send the first message to the network device by using a second beam of the terminal device other than the first beam, wherein the first message comprises the identifier information of the terminal device and index information of the first beam; and
the receiving unit is further configured to receive, by using each first beam, a second message that is sent by the network device based on the identifier information and the index information of the first beam.

38. The terminal device according to claim 35, wherein the second message is an RRC connection establishment message, or the second message is a beam connection establishment message; and
the receiving unit is specifically configured to: when the processing unit determines, based on the identifier information, that a working status of the terminal device is an idle mode, receive, by the receiving unit by using one first beam, the RRC connection establishment message sent by the network device, so that the processing unit establishes an RRC connection to the network device; or
when the processing unit determines, based on the identifier information, that a working status of the terminal device is a connected mode, receive, by the receiving unit by using a plurality of first beams, the beam connection establishment message sent by the network device, so that the processing unit establishes a plurality of beam connections to the network device.

39. The terminal device according to claim 38, wherein
when the receiving unit receives the RRC connection establishment message sent by the network device, the processing unit establishes the RRC connection to the network device; or
when the receiving unit receives the beam connection establishment message sent by the network device, the processing unit establishes the beam connection to the network device.

40. The terminal device according to claim 35, wherein before the sending unit sends the first message to the network device by using each first beam,
the sending unit is further configured to send a random access preamble message to the network device by using each first beam; and
the receiving unit is further configured to receive, by using each first beam, a random access response message that is sent by the network device based on the random access preamble message.

41. The terminal device according to claim 40, wherein the sending unit is specifically configured to simultaneously send the random preamble access messages to the network device by using the first beams; or
successively send the random preamble access messages to the network device by using the first beams.

42. A network device, wherein the network device communicates with and is connected to a terminal device by using a first beam, and the network device comprises:
a processing unit, configured to establish a communication connection to the terminal device by using a second beam.

43. The network device according to claim 42, wherein the network device further comprises a sending unit;
the sending unit is configured to send reference signals to the terminal device by using a plurality of second beams, so that the terminal device measures signal quality of the plurality of second beams, to determine a second beam pair, wherein
the first beam is a beam in a first beam pair, and the first beam is a beam used by the network device; and
the second beam is a beam in the second beam pair, and the second beam is a beam used by the network device.

44. The network device according to claim 43, wherein the network device further comprises a receiving unit;
the receiving unit is configured to receive, by using the second beam, a random access preamble message sent by the terminal device;
the sending unit is further configured to send a random access response message to the terminal device based on the random access preamble message by using the second beam;
the receiving unit is further configured to receive, by using the second beam, a first message that is sent by the terminal device based on the random access response message, wherein the first message comprises identifier information of the terminal device and beam connection establishment request information; and
the sending unit is further configured to send a first response message to the terminal device based on the identifier information of the terminal device and the beam connection establishment request information by using the second beam, so that the processing unit establishes the communication connection to the terminal device by using the second beam.

45. The network device according to claim 44, wherein the first response message comprises beam connection establishment information; and
the sending unit is specifically configured to send the beam connection establishment information to the terminal device based on the identifier information of the terminal device and the beam connection establishment request information by using the second beam.

46. The network device according to claim 43, wherein before the processing unit establishes the communication to the terminal device by using the second beam,
the sending unit is further configured to send the reference signals to the terminal device by using a plurality of beams, so that the terminal device measures signal quality of the plurality of beams of the network device;
the receiving unit is further configured to receive, by using the first beam, a measurement report sent by the terminal device, wherein the measurement report comprises measurement results of the signal quality of the plurality of beams of the network device; and
the sending unit is further configured to send a second message to the terminal device based on the measurement results by using the first beam, wherein the second message comprises first indication information, so that the terminal device determines the second beam pair according to the first indication information.

47. The network device according to claim 46, wherein the first indication information comprises index information of the second beam of the network device, so that the terminal device determines the second beam pair based on the index information.

48. The network device according to claim 47, wherein the first indication information further comprises instruction information;
the receiving unit is further configured to receive, by using the second beam, a random access preamble message that is sent by the terminal device according to the instruction information; and
the sending unit is further configured to send a random access response message to the terminal device based on the random access preamble message by using the second beam, wherein the random access response message comprises second indication information, so that the terminal device determines, according to the second indication information, to establish the communication connection to the network device.

49. A network device, wherein the network device comprises:
a receiving unit, configured to receive a first message that is sent by a terminal device after the terminal device determines a plurality of first beam pairs, wherein the first message comprises identifier information of the terminal device; and
a sending unit, configured to send a second message to the terminal device based on the identifier information, so that the terminal device establishes a communication connection to the network device based on the second message.

50. The network device according to claim 43, wherein
the receiving unit is specifically configured to receive, by using a first beam of the network device, the first message that is sent by the terminal device after the terminal device determines the plurality of first beam pairs, wherein the first beam of the network device is a beam in the first beam pair.

51. The network device according to claim 43, wherein
the receiving unit is further configured to receive, by using a second beam of the network device, the first message that is sent by the terminal device after the terminal device determines the plurality of first beam pairs, wherein the first message comprises identifier information of the terminal device and index information of a first beam of the terminal device in the first beam pair, and the second beam of the network device is a beam other than the first beam; and
the sending unit is specifically configured to send the second message to the terminal device based on the identifier information and the index information of the first beam of the terminal device.

52. The network device according to claim 49, wherein the network device further comprises a processing unit;
the second message is an RRC connection establishment message, or the second message is a beam connection establishment message; and
the sending unit is specifically configured to: when the processing unit determines, based on the identifier information, that a working status of the terminal device is an idle mode, send, by the sending unit, the RRC connection establishment message to the terminal device by using one first beam, so that the terminal device establishes an RRC connection to the processing unit; or
when the processing unit determines, based on the identifier information, that a working status of the terminal device is a connected mode, send, by the sending unit, the beam connection establishment message to the terminal device by using the plurality of first beams, so that the terminal device establishes a plurality of beam connections to the processing unit.

53. The network device according to claim 52, wherein before the receiving unit receives, by using the plurality of first beams, the first messages sent by the terminal device,
the receiving unit is further configured to receive, by using the plurality of first beams, random preamble access messages sent by the terminal device; and
the sending unit is further configured to send random access response messages to the terminal device based on the random access preamble messages by using the plurality of first beams.

54. The network device according to claim 53, wherein the receiving unit is specifically configured to: simultaneously receive, by using the plurality of first beams, the random preamble access messages sent by the terminal device; or
successively receive, by using the plurality of first beams, the random preamble access messages sent by the terminal device.

55. A computer-readable storage medium, comprising an instruction, wherein when the computer-readable storage medium is run on a device, the device is enabled to perform the method according to any one of claims 1 to 27.

56. An apparatus, comprising a memory, a processor, and a computer program stored in the memory and capable of being run on the processor, wherein when executing the program, the processor implements the method according to any one of claims 1 to 27.
